# EUROPÄISCHE PATENTSCHRIFT

(11) **EP 0 925 234 B1**
(45) Veröffentlichungstag und Bekanntmachung des Hinweises auf die Patenterteilung: **19.07.2000**
(21) Anmeldenummer: 97944797.6
(22) Anmeldetag: 27.08.1997
(51) Int. Cl.: B65D 81/32

(54) **ZWEI-KOMPONENTEN-BEHÄLTER**
TWO COMPONENT CONTAINERS
RECIPIENTS RENFERMANT DEUX SUBSTANCES

(30) Priorität: 04.09.1996 DE 19635833
(43) Veröffentlichungstag der Anmeldung: 30.06.1999
(73) Patentinhaber: Henkel Kommanditgesellschaft auf Aktien, 40589 Düsseldorf-Holthausen (DE)
(72) Erfinder: KELDERS, Jan, NL-5151 DL Drunen (NL); LEPSIUS, Tilwin, D-40545 Düsseldorf (DE); BOES, Erwin, NL-5706 ST Helmond (NL)
(86) Internationale Anmeldenummer: EP9704659
(87) Internationale Veröffentlichungsnummer: WO9809886

(56) Entgegenhaltungen:
- EP-A- 0 475 789
- EP-A- 0 528 707
- FR-A- 2 569 666
- FR-A- 2 707 601

## Beschreibung

Die Erfindung betrifft ein Behältersystem zur Aufnahme mindestens zweier Substanzen, die in jeweils einem mit je einem Verschluß verschließbaren Behälter des Behältersystems getrennt vorhaltbar sind, mit einem zwischen jeweils zwei Behältern angeordneten Zwischenverschluß, wobei jeweils zwei Behälter mit einander zugewandten montierten Verschlüssen verbindbar und in verbundener Form durch Relativbewegung zueinander derart öffenbar sind, daß die Behältervolumina miteinander verbunden sind sowie ein Verfahren zum Zusammenführen mindestens zweier in einem Behältersystem in vorbestimmten Mengen getrennt in jeweils einem verschlossenen Behälter vorgehaltener Substanzen, wobei die mindestens zwei Behälter mit einem dazwischen angeordneten Zwischenverschluß und einander zugewandten Verschlüssen der Behälter miteinander verbunden sind und die verbundenen Behälter durch relative Bewegung zueinander derart geöffnet werden, daß die mindestens zwei Substanzen zusammengebracht werden können.

Es sind viele Mehrkomponenten-Systeme bekannt, die erst unmittelbar vor der Anwendung zusammengebracht werden sollen, damit die durch ihre Zusammenführung bewirkte Reaktion nicht vorher eintritt. Weiterhin ist bekannt, daß solche Mehrkomponenten-Systeme häufig nur dann ordnungsgemäß funktionieren, wenn die einzelnen Komponenten in bestimmten Verhältnissen zueinander dosiert werden.

Es sind verschiedene Doppelkammersystem bekannt, in denen Zwei-Komponenten-Substanzen getrennt verschlossen aufbewahrt und zum Zusammenbringen der Substanzen vor Gebrauch die Behälterverschlüsse durch Zerstörung, beispielsweise durch Aufschneiden oder Durchstoßen, geöffnet werden. Aus der Patentschrift DE 44 36 863 ist ein Doppelkammersytem bekannt, bei dem die Behälter durch festklemmbare Stopfen verschlossen sind, die durch eine Relativ-Drehbewegung zueinander sich gegenseitig aus der Klemmverschlußlage herausdrücken und dadurch Verbindungskanäle zwischen den Behältern freigeben. Dies hat jedoch den Nachteil, daß die Behälteröffnungen sehr weit eingeengt werden und an den Konstruktionsteilen zwischen den Behältern bzw. deren Öffnungen die zusammenzubringenden Substanzen gehindert werden und teilweise daran anhaften.

Das der Erfindung zugrundeliegende technische Problem besteht darin, ein wenig aufwendiges Behältersystem vorzuschlagen, bei dem die Behälteröffnungen nach Öffnung der Verschlüsse weitestgehend frei sind und das wiederverwendbar ist, sowie ein Verfahren vorzuschlagen, mit dem dieses Problem einfach und ohne Umstände zu lösen ist.

Dieses Problem wird erfindungsgemäß dadurch gelöst, daß ein gattungsgemäßes Behältersystem derart ausgebildet wird, daß die Verschlüsse und der zwischenverschluß Schraubverschlüsse sind und einer der Behälter durch eine Kombination von Verschluß und Zwischenverschluß verschließbar ist, bzw. durch ein vorbeschriebenes Verfahren, bei dem die beiden Behälter jeweils durch gegenläufig drehende Schraubverbindungen der Verschlüsse zu verschließen und zu öffnen sind.

Ein derartiges Behältersystem hat den Vorteil, daß die einzelnen Substanzen als Komponenten eines Mehrkomponenten-Systems herstellerseitig in den richtigen Mengen in die jeweiligen Behälter gefüllt und verschlossen werden können, und daß die so vorbereiteten Behälter zu einem System verbunden werden können, in dem die einzelnen Substanzen entsprechend ihren Mischungsanteilen vorhanden sind und unverwechselbar bleiben. Kurz vor der Anwendung muß man die im System verbundenen Behälter nur relativ zueinander bewegen, um sie derart zu öffnen, daß die Behältervolumina miteinander verbunden sind, ohne daß die Behälteröffnungen weitgehend eingeengt werden oder störende Verschlußteile den zusammenströmenden Substanzen im Wege stehen. Die darin vorgehaltenen Substanzen können dadurch ungestört und vollständig zusammengebracht und gemischt werden. Durch die Verwendung von Schraubverschlüssen ist das Behältersystem grundsätzlich geeignet, wiederverwendet zu werden.

Werden zwei zu einem System verbundene Behälter mit einander zugewandten Verschlüssen miteinander verbunden, die gegengängige Schraubverschlüsse aufweisen, sind beide Behälter durch eine einsinnige Drehbewegung in vorteilhafter Weise zu öffnen. Dieser Vorteil ist auch bei einem System zu erzielen, bei dem zwischen zwei Behältern zusätzlich ein Zwischenverschluß angeordnet ist. Bei einer besonders vorteilhaften Ausführungsform dient der Zwischenverschluß mit mindestens einem Schraubgewinde zusammen mit einem gleichsinnig drehenden Schraubverschluß als Verschluß eines Behälters, während der andere Behälter mit einem gleichsinnig drehenden Außengewinde in den Zwischenverschluß eindrehbar und durch einen entgegengesetzt drehenden Schraubverschluß verschließbar ist.

Wenn sich die beiden Schraubverschlüsse beim Verbinden der beiden Behälter mit ihren Außenseiten gegeneinander axial verriegeln, kann in vorteilhafter Weise die Axialbewegung des einen Schraubverschlusses auf den anderen übertragen werden. Dadurch ist es möglich, einen Schraubverschluß von außen auch dann noch axial zu bewegen, wenn er bereits aus seiner Schraubverbindung gelöst ist.

Bei besonderen Ausführungsform ist es vorteilhaft möglich, mehr als zwei Substanzen in einem Behältersystem vorzuhalten und in verbundener Form durch relatives Verdrehen der Behälter zueinander die Substanzen von mehr als Zwei-Komponenten-Systemen zusammenzubringen und zu mischen.

Diese und weitere Vorteile werden durch die Beschreibung eines Ausführungsbeispiels verdeutlicht, das in der Zeichnung dargestellt ist. Dabei handelt es um ein System aus zwei Behältern, in dem beispielsweise ein Zweikomponenten-Haarfärbemittel aufbewahrt und durch einfache Bewegung der beiden Behälter relativ zueinander aktiviert werden kann. In der Zeichnung zeigen
- Fig. 1: das Behältersystem in geschnittener Seitenansicht, zerlegt in seine Einzelteile;
- Fig. 2: das verschlossene und miteinander verbundene Behältersystem in geschnittener Seitenansicht;
- Fig. 3: das zerlegte Behältersystem in perspektivischer Ansicht und
- Fig. 4: das Behältersystem in aktiviertem Zustand, in geschnittener Ansicht.
- Fig. 5,6: Modifikationenen des Ausführungs beispiels

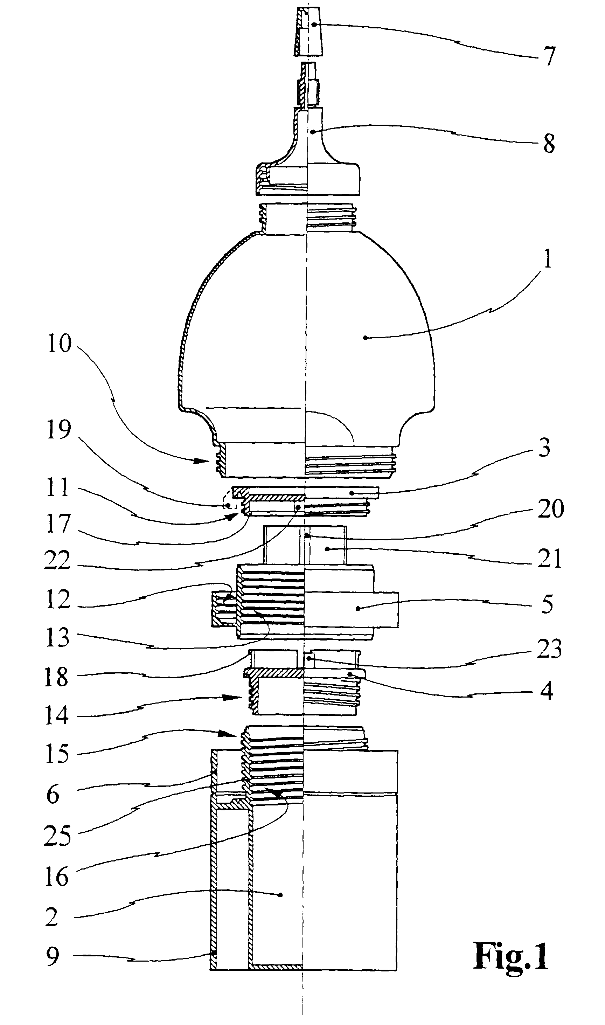

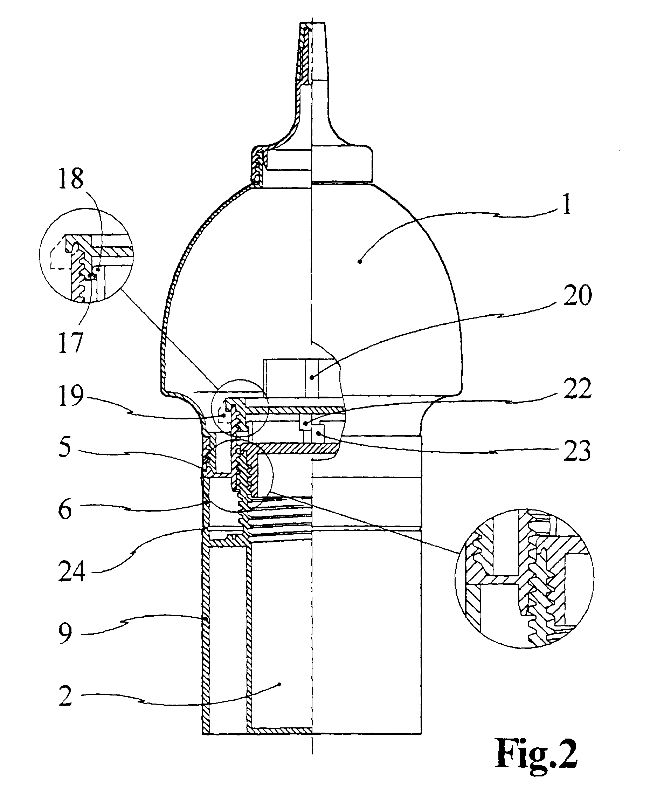

In Figur 1 ist das Ausführungsbeispiel in geschnittener Seitenansicht dargestellt, wobei das Behältersystem in seine sieben Einzelteile zerlegt ist. Dabei handelt es sich von oben nach unten um die Verschlußkappe 7, den Ausguß 8, den oberen Behälter 1, den oberen Verschluß 3, den Zwischenverschluß 5, den unteren Verschluß 4 und den unteren Behälter 2. Am unteren Behälter sind noch gesondert dargestellt die Distanzhülse 6, die in einer Flucht mit dem Außenmantel 9 des unteren Behälters 2 liegt und durch eine Sollbruchkerbe vom Außenmantel abgeteilt ist. Wie in Figur 2 deutlicher zu erkennen, stellt die Distanzhülse 6 durch ihre Anlage am Zwischenverschluß 5 den Soll-Abstand zwischen oberem Behälter 1 und unterem Behälter 2 sicher, solange diese in verschlossener Form miteinander verbunden sind. Der Außenmantel 9 dient in erster Linie, wie später noch ausführlich beschrieben wird, als Griff für das gegenseitige Drehen von unterem zu oberem Behälter.

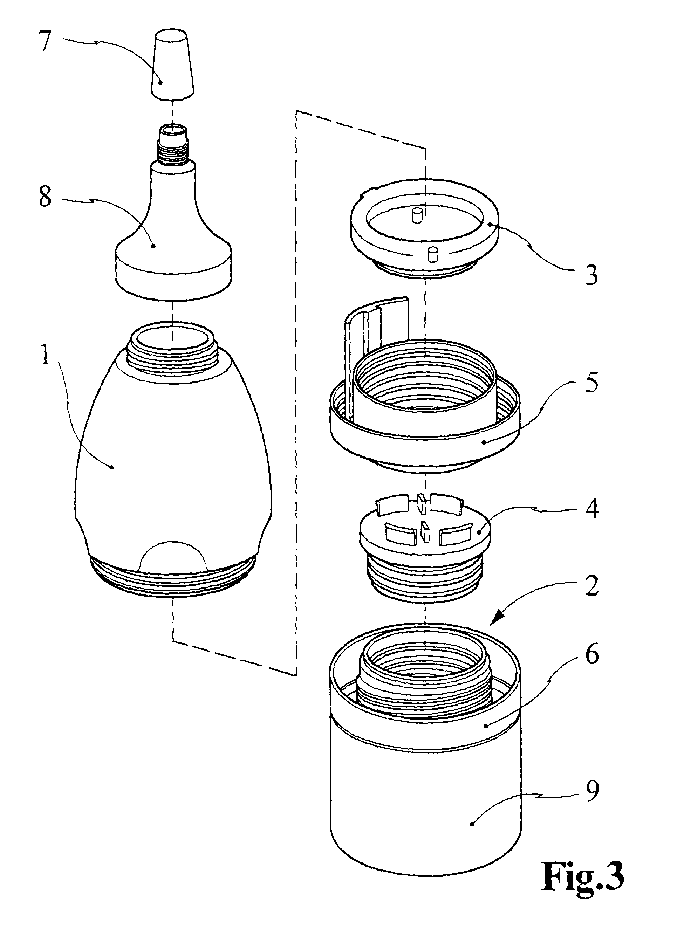

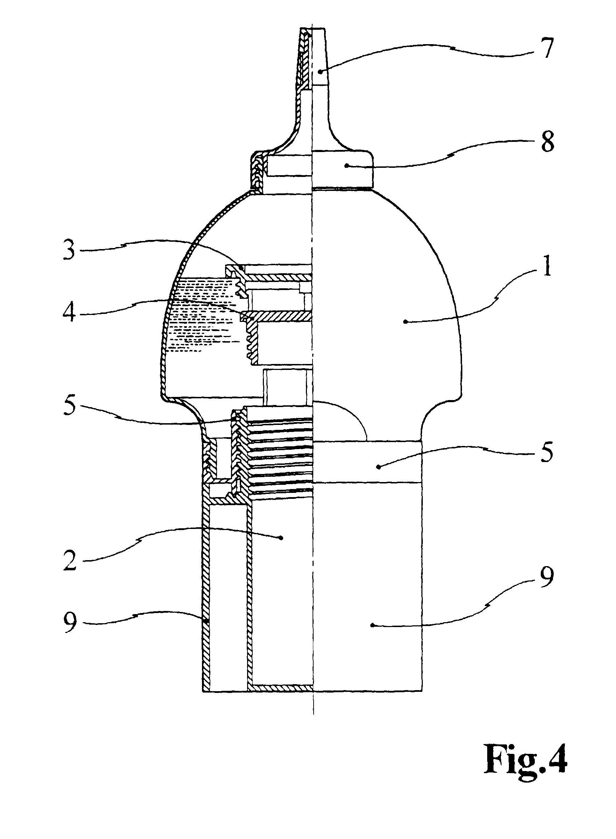

In Figur 2 ist gut zu erkennen, wie die dem Verschluß und der Verbindung der beiden Behälter 1, 2 dienenden Teile zueinander in Verbindung stehen, wenn das Behältersystem verschlossen und verbunden, aber noch nicht aktiviert ist. Durch die perspektivische Darstellung in Figur 3 wird die Gestaltung der Einzelteile, insbesondere der Verriegelungsmittel anschaulich verdeutlicht. In Figur 4 ist dargestellt, wie sich das System in aktiviertem Zustand darstellt.

Das Ausführungsbeispiel ist vollkommen mit Schraubverbindungen zum Verschließen und Verbinden der Teile ausgeführt, so daß das Behältersystem insgesamt mit Ausnahme der Distanzhülse 6 wiederverwendbar ist. Die Distanzhülse 6 müßte im Falle einer Wiederverwendung separat angeschweißt werden oder durch ein neues unteres Behälterteil 2 mit angeformter Distanzhülse 6 ersetzt werden. Generell kann ein Distanzelement aber auch angeklemmt werden, so daß das Behältersystem insgesamt wiederverwendbar ist.

Im folgenden werden die Schraubgewinde und sonstigen Verbindungs- und Verriegelungsteile aufgezählt, die zum Verschließen und Verbinden zusammenarbeiten. Am oberen Behälter 1 ist ein Außengewinde 10 vorhanden, daß in das äußere Innengewinde 12 des Zwischenverschlusses 5 paßt. In das innere Innengewinde 13 des Zwischenverschlusses 5 paßt das Außengewinde 11 des oberen Verschlusses 3. Die Kombination des Zwischenverschlusses 5 und des in ihn hineingedrehten oberen Verschlusses 3 bildet den Verschluß des oberen Behälters 1.

Im oberen Teil des unteren Behälters 2 ist eine Hülse 25 vorhanden, die sowohl auf ihrer Innen- als auch auf ihrer Außenfläche ein Gewinde trägt. Das Außengewinde 15 des unteren Behälters 2 paßt in das Innengewinde 13 des Zwischenverschlusses. Alle bisher erwähnten Gewinde sind gleichsinnig drehende Gewinde, im Ausführungsbeispiel alles Rechtsgewinde. Die beiden ineinanderpassenden Gewinde, die nachfolgend aufgezählt werden, sind entgegengesetzt drehende Gewinde, im Ausführungsbeispiel Linksgewinde. Dabei handelt es sich um das Innengewinde 16 des unteren Behälters, in das das Außengewinde 14 des unteren Verschlusses paßt.

Wenn die beiden Behälter 1 und 2 befüllt sind, werden sie zunächst jeweils verschlossen. Dies geschieht beim unteren Behälter 2 dadurch, daß der untere Verschluß 4 in ihn hineingeschraubt wird. Beim oberen Behälter kann der Verschluß alternativ geschehen. Entweder wird zunächst der untere Teil des oberen Behälters durch die Kombination von oberem Verschluß 3 und Zwischenverschluß 5 verschlossen und der einseitig verschlossene Behälter 1 durch die obere Öffnung befüllt. Danach wird dann die obere Öffnung durch den Ausguß 8 mit Verschlußkappe 7 verschlossen. Dieser Vorgang kann jedoch auch in umgekehrter Reihenfolge ablaufen. Werden die individuell verschlossenen Behälter 1 und 2 jetzt dadurch verbunden, daß der untere Behälter 2 mit seinem Außengewinde 15 in das Innengewinde 13 des Zwischenverschlusses hineingeschraubt wird, bewegen sich dabei auch die Hülsensegmente mit nach oben, die auf der äußeren Schließfläche des unteren Verschlusses 4 ausgebildet sind und die in ihrem oberen Rand einen Wulst 18 ausgebildet haben. Dieser nach außen ragende Wulst 18 paßt mit dem nach innen ragenden Wulst 17 am oberen Verschluß 3 so zusammen, daß die Hülsensegmente mit dem Wulst 18 sich etwas zurückbiegen und in die oberhalb des Wulstes 17 gebildete Höhlung hineinbewegen, bis sie mit ihrem oberen Rand an dem Verschlußdeckel des oberen Verschlusses 3 anstoßen. Dadurch klicken die beiden Verschlüsse ineinander und sind vertikal zueinander verriegelt.

Am unteren Verschluß 4 ist weiterhin ein Anschlag 23 ausgebildet, der auf derselben Umfangslinie liegt wie ein Nocken 22, der am Verschlußboden des oberen Verschlusses 3 angebracht ist. Am oberen Verschluß 3 ist außerdem peripher ein Vorsprung 19 ausgebildet, der sich an den Steg 20 anlegt, der im Hülsenabschnitt 21 des Zwischenverschlusses 5 ausgebildet ist. In verschlossener und miteinander verbundener Form stellt sich das Behältersystem so dar, wie in Figur 2 dargestellt.

Zur Aktivierung des Behältersystems wird zunächst die Distanzhülse 6 mittels einer nicht dargestellten Abreißlasche entfernt. Dadurch kann sich der untere Behälter 2 dem oberen Behälter 1 weiter annähern. Wird jetzt der untere Behälter 2 im Uhrzeigersinn gegen den oberen Behälter 1 gedreht, dreht sich der untere Verschluß 4 mit dem unteren Behälter 2. Dabei erfaßt der Anschlag 23 den Nocken 22, so daß dann auch der obere Verschluß 3 mitgedreht wird. Dabei bewegt sich der nasenartige Vorsprung 19 auf seiner peripheren Bahn so lange, bis er sich an den Steg 20 des Hülsenabschnittes 21 anlegt. Statt des Systems Vorsprung 19 / Steg 20 kann alternativ auch eine Verriegelungsgruppe mit einem Vorspruch 19 gewählt werden, der in eine Rille 20 einrastet. Dies ist dadurch möglich, daß der Hülsenabschnitt 21 flexibel ist und vom Vorsprung 19 zurückgebogen wird. Sobald der Vorsprung 19 in die Rille 20 einrastet, biegt sich der Hülsenabschnitt 21 wieder nach vorn und hält den Vorsprung 19 seitlich begrenzt fest.

Die Bewegungsbahn des Vorsprungs 19 muß naturgemäß kleiner als eine vollständige Umdrehung von 360 Grad sein. Im Ausführungsbeispiel beträgt sie 315 Grad. 315 Grad entsprechend 7/8 Umdrehungen ist auch der Verschlußweg des Außengewindes 11 im Innengewinde 13, so daß mit dem Anlegen des Vorsprungs 19 an den Steg 20 gleichzeitig der obere Verschluß 3 aus dem Zwischenverschluß 5 gelöst ist.

Wird der untere Behälter 2 weiter im Uhrzeigersinn gedreht, kann sich der untere Verschluß 4 nicht weiter mitdrehen, da er durch den Anschlag 23 gegen den Nocken 22 festgelegt und dieser durch Verbindung mit dem oberen Verschluß 3 an der weiteren Drehbewegung dadurch gehindert ist, daß der Vorsprung 19 an dem Steg 20 anliegt. Dadurch bewirkt die weitere Drehung des unteren Behälters 2 im Uhrzeigersinn das Herausdrehen des Linksgewindes 14, 16 und damit des unteren Verschlusses 4, der sich zusammen mit dem oberen Verschluß 3, mit dem er durch die Wülste 17, 18 festgeklickt ist, nur noch vertikal bewegen kann. Im Ausführungsbeispiel der Fig. 1 bis 4 ist der untere Verschluß 4 nach zwei Umdrehungen im Uhrzeigersinn aus dem unteren Behälter 2 herausgeschraubt und kann gemeinsam mit dem angeklickten oberen Verschluß 3 in den Innenraum des oberen Behälters 1 gelangen. Damit ist die Verbindung der beiden Volumina des oberen Behälters 1 und des unteren Behälters 2 gegeben. Danach können die Substanzen, die in den Behältern 1, 2 vorhanden sind, zusammengebracht und gemischt werden und nach Abschrauben der Verschlußkappe 7 als Mischung dosiert werden.

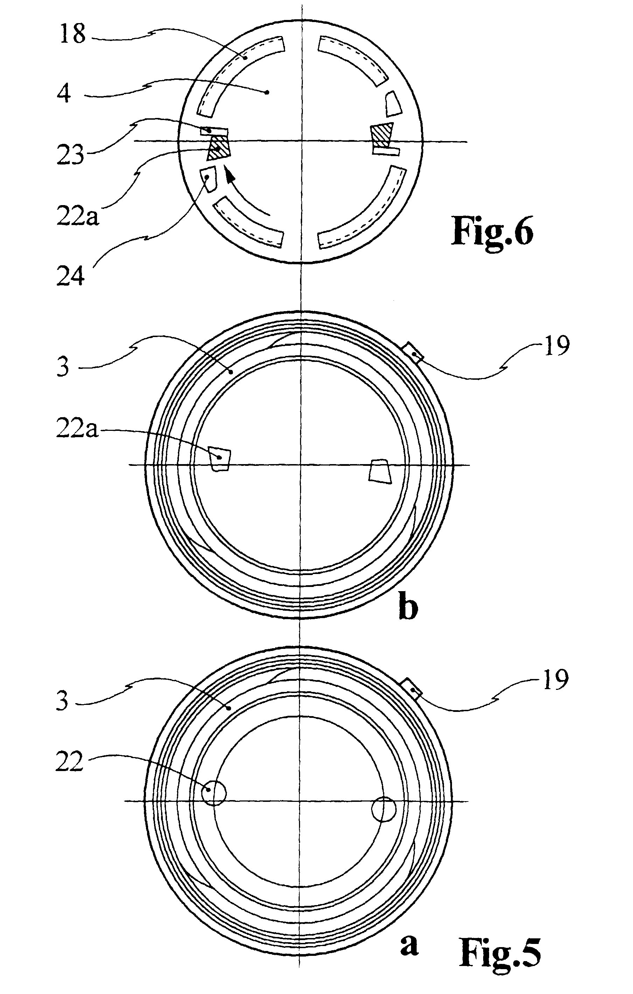

In Fig. 5b ist eine Modifikation anhand eines anderen Ausführungsbeispiels dargestellt. Hierbei ist die Form des Nockens auf dem oberen Verschluß 3 von rundem Querschnitt 22, wie in Fig. 5a dargestellt, auf einen quasi viereckigen Querschnitt 22a mit einer in der Draufsicht der Fig. 5b nach rechts oben herausragenden Spitze geändert worden. Dieser Nocken 22a ist in Fig. 6, in der die Draufsicht einer anderen Ausführungsform des oberen Verschlusses 3 dargestellt ist, schraffiert in um 180° gedrehter Form gezeichnet, um das Zusammenwirken mit dem Anschlag 23 und einem zusätzlichen Nocken 24 des unteren Verschlusses 4 aufzuzeigen. Wird hierbei zur Aktivierung des Behältersystems der untere Behälter 2 im Uhrzeigersinn und damit auch der untere Verschluß 4 gedreht, erfaßt der Anschlag 23 den Nocken 22a, der sich beim weiteren Eindrehen seinerseits in die Lücke zwischen Anschlag 23 und Nocken 24 einklickt. Damit kann das System nur noch in einer Richtung gedreht werden.

## Patentansprüche

1. Behältersystem zur Aufnahme mindestens zweier Substanzen, die in jeweils einem mit je einem Verschluß (3,4) verschließbaren Behälter (1,2) des Behältersystems getrennt vorhaltbar sind, mit einem zwischen jeweils zwei Behältern (1, 2) angeordneten Zwischenverschluß (5), wobei jeweils zwei Behälter (1, 2) mit einander zugewandten montierten Verschlüssen (3, 4) verbindbar und in verbundener Form durch Relativbewegung zueinander derart öffenbar sind, daß die Behältervolumina miteinander verbunden sind,
dadurch gekennzeichnet, daß
die Verschlüsse (3, 4) und der Zwischenverschluß (5) Schraubverschlüsse sind und einer der Behälter durch eine Kombination von Verschluß (3) und Zwischenverschluß (5) verschließbar ist.

2. Behältersystem gemäß Anspruch 1, dadurch gekennzeichnet, daß die Kombination des einen Verschlusses (3) und des Zwischenverschlusses (5) sowie der eine durch diese Kombination verschließbare Behälter (1) in einer Richtung drehende Gewinde und der den anderen Behälter (2) verschließende Verschluß (4) sowie der andere Behälter (2) zum Verschluß gegenläufig drehende Gewinde aufweisen.

3. Behältersystem gemäß Anspruch 1 oder 2, dadurch gekennzeichnet, daß beide Behälter (1, 2) in einer Richtung drehende Außengewinde aufweisen und in den Zwischenverschluß (5) von beiden Seiten her einschraubbar sind.

4. Behältersystem gemäß Anspruch 3, dadurch gekennzeichnet, daß die beiden Schraubverschlüsse (3, 4) beim Verbinden der beiden Behälter (1, 2) mit ihren vom Behälter abgewandten Seiten gegeneinander axial verriegelbar, durch ein Nocken-Anschlagsystem (22, 23) in einsinniger Drehrichtung festlegbar und der mit dem Zwischenverschluß (5) gleichsinnig drehende Schraubverschluß (3) nach Lösen vom Zwischenverschluß (5) gegen weitere Drehbewegung gegenüber dem Zwischenverschluß (5) derart festlegbar ist, daß er nur noch axial bewegbar ist.

5. Behältersystem gemäß Anspruch 4, dadurch gekennzeichnet, daß der mit dem Zwischenverschluß (5) gleichsinnig drehende Schraubverschluß (3) gegen weitere Drehbewegung durch Anlegen eines peripheren Vorsprungs (19) an einen axial verlaufenden Steg (20) in einem Hülsenabschnitt (21) des Zwischenverschlusses (5) festlegbar ist.

6. Behältersystem gemäß einem der Ansprüche 1 bis 5, dadurch gekennzeichnet, daß beim Annähern des unteren Schraubverschlusses 4 an den oberen Verschluß 3 ein Nocken 22a des oberen Verschlusses 3 in eine Lücke zwischen Anschlag 23 und einem Nocken 24 des unteren Verschlusses 4 zur Verriegelung einklickbar ist.

7. Behältersystem gemäß einem der Ansprüche 1 bis 6, dadurch gekennzeichnet, daß zwischen zwei verbundenen und verschlossenen Behältern (1, 2) eine entfernbare Distanzhülse (6) derart angeordnet ist, daß die beiden Behälter (1, 2) nicht aufeinanderzu bewegbar sind.

8. Behältersystem gemäß Anspruch 7, dadurch gekennzeichnet, daß der Durchmesser der Distanzhülse (6) gleich dem größten Durchmesser des Zwischenverschlusses (5) und der beiden Behälter (1, 2) an den einander zugewandten Enden ist.

9. Behältersystem gemäß einem der vorstehenden Ansprüche, dadurch gekennzeichnet, daß mindestens ein Behälter auf beiden Enden gegenläufig drehende Schraubverschlüsse aufweist und über einen Zwischenverschluß (5) mit einander zugewandten Verschlüssen mit einem weiteren Behälter verbunden ist.

10. Verfahren zum Zusammenführen mindestens zweier in einem Behältersystem in vorbestimmten Mengen getrennt in jeweils einem verschlossenen Behälter (1, 2) vorgehaltener Substanzen, wobei die mindestens zwei Behälter mit einem dazwischen angeordneten Zwischenverschluß (5) und einander zugewandten Verschlüssen (3, 4) der Behälter miteinander verbunden sind und die verbundenen Behälter (1, 2) durch relative Bewegung zueinander derart geöffnet werden, daß die mindestens zwei Substanzen zusammengebracht werden können, dadurch gekennzeichnet, daß die beiden Behälter (1, 2) jeweils durch gegenläufig drehende Schraubverbindungen der Verschlüsse (3,4) zu verschließen und zu öffnen sind.

## Claims

1. A container system for accommodating at least two substances held separately in containers (1,2) - each closable by a closure (3,4) - of the container system, comprising an intermediate closure (5) disposed between two containers (1,2), two containers (1,2) with fitted closures (3,4) facing one another being designed for connection and, after connection, being designed to be opened by movement relative to one another in such a way that the container volumes are connected together, characterized in that the closures (3,4) and the intermediate closure (5) are screw closures and one of the containers is designed to be closed by a combination of closure (3) and intermediate closure (5).

2. A container system as claimed in claim 1, characterized in that the combination of one closure (3) and the intermediate closure (5) and the one container (1) closable by that combination comprise screwthreads turning in one direction while the closure (4) closing the other container (2) and the other container (2) itself comprise screwthreads turning in the opposite direction for the purpose of closure.

3. A container system as claimed in claim 1 or 2, characterized in that both containers (1,2) have external screwthreads turning in one direction and are designed to be screwed into the intermediate closure (5) from both sides.

4. A container system as claimed in claim 3, characterized in that, when the two containers (1,2) are connected, the two screw closures (3,4) are designed to lock axially against one another with their sides remote from the container and to be held by a cam/stop system (22,23) so that they turn in one direction only and in that, after its release from the intermediate closure (5), the screw closure (3) turning in the same direction as the intermediate closure (5) is prevented from turning any further relative to the intermediate closure (5) so that it is only able to move axially.

5. A container system as claimed in claim 4, characterized in that the screw closure (3) turning in the same direction as the intermediate closure (5) can be prevented from turning any further by contact of a peripheral projection (19) with an axially extending flange (20) in a sleeve section (21) of the intermediate closure (5).

6. A container system as claimed in any of claims 1 to 5, characterized in that, as the lower screw closure (4) approaches the upper closure (3), a cam (22a) of the upper closure (3) is designed to click into a gap between the stop (23) and a cam (24) of the lower closure (4) for the purpose of locking.

7. A container system as claimed in any of claims 1 to 6, characterized in that a removable distance sleeve (6) is disposed between two connected and closed containers (1,2) so that the two containers (1,2) cannot be moved towards one another.

8. A container system as claimed in claim 7, characterized in that the diameter of the distance sleeve (6) is equal to the largest diameter of the intermediate closure (5) and the two containers (1,2) at the ends facing one another.

9. A container system as claimed in any of the preceding claims, characterized in that at least one container has screw closures turning in opposite directions at both ends and is connected to another container via an intermediate closure (5) with closures facing one another.

10. A method for combining at least two substances held separately in predetermined quantities in closed containers (1,2) of a container system, the at least two containers with an intermediate closure (5) disposed in between and closures (3,4) facing one another of the containers being connected to one another and the connected containers (1,2) being opened by movement relative to one another so that the at least two substances can be combined, characterized in that the two containers (1,2) can each be opened and closed by screw connections of the closures (3,4) which turn in opposite directions.

## Revendications

1. Système de récipients pour recevoir au moins deux substances pouvant être stockées chacune séparément dans un des récipients (1, 2) du système, des fermetures (3, 4) pouvant obturer ces récipients entre lesquels se trouve une fermeture intermédiaire (5) et qui peuvent être reliés par des fermetures (3, 4) montées en face l'une de l'autre de manière à pouvoir, dans cet état de liaison, s'ouvrir l'un par rapport à l'autre par un mouvement relatif, avec mise en communication des volumes intérieurs des récipients,
caractérisé en ce que
les fermetures (3, 4) et la fermeture intermédiaire (5) sont des fermetures à vis et un des récipients peut être fermé en combinant la fermeture (3) et la fermeture intermédiaire (5) .

2. Système de récipients selon la revendication 1,
caractérisé en ce que
quand il y a combinaison d'une fermeture (3) et de la fermeture intermédiaire (5), le filetage que porte le récipient (1) que peut fermer cette combinaison tourne dans un sens tandis que la fermeture (4) obturant l'autre récipient (2) et ce récipient lui-même portent des filetages tournant dans l'autre sens pour la fermeture.

3. Système de récipients selon les revendications 1 ou 2,
caractérisé en ce que
les deux récipients (1, 2) présentent un filetage externe tournant dans un sens et peuvent être vissés de part et d'autre dans la fermeture intermédiaire (5).

4. Système de récipients selon la revendication 3,
caractérisé en ce que
les deux fermetures à vis (3, 4), lorsqu'on réunit les deux récipients (1, 2) peuvent être verrouillées axialement l'une par rapport à l'autre, par leurs côtés opposés aux récipients, elles peuvent être fixées dans un seul sens de rotation par un système à ergot et butée (22, 23) et la fermeture à vis (3) tournant dans le même sens avec la fermeture intermédiaire (5) peut, après libération de cette fermeture (5) être immobilisée en rotation par rapport à la fermeture (5) sans pouvoir alors se déplacer autrement qu'en direction axiale.

5. Système de récipients selon la revendication 4,
caractérisé en ce que
la fermeture à vis (3) qui tourne avec la fermeture intermédiaire (5) dans le même sens est immobilisée de manière à ne plus pouvoir tourner, par l'appui d'une saillie périphérique (19) sur une barrette (22) s'étendant axialement dans une partie de douille (21) de la fermeture intermédiaire (5) .

6. Système de récipients selon l'une des revendications 1 à 5,
caractérisé en ce que
quand on rapproche la fermeture inférieure à vis (4) de la fermeture supérieure à vis (3), un ergot (22a) de la fermeture supérieure (3) peut venir s'encliqueter dans un intervalle séparant la butée (23) et un ergot (24) de la fermeture inférieure (4), pour créer un verrouillage.

7. Système de récipients selon l'une des revendications 1 à 6,
caractérisé en ce qu'
entre deux récipients fermés et reliés (1, 2) est montée une douille d'espacement (6) retirable, empêchant le mouvement relatif des deux récipients (1, 2).

8. Système de récipients selon la revendication 7,
caractérisé en ce que
le diamètre de la douille d'espacement (6) est égal au plus grand diamètre de la douille intermédiaire (5) et des deux récipients (1, 2) à leurs extrémités se faisant face.

9. Système de récipients selon l'une des revendications précédentes,
caractérisé en ce qu'
au moins un récipient présente sur ses deux extrémités des fermetures à vis de sens contraires et se trouve relié à un autre récipient par une fermeture intermédiaire (5) portant des fermetures se faisant face.

10. Procédé pour réunir au moins deux substances stockées dans un système de récipients, séparément chacune et en quantité donnée dans un récipient fermé, selon lequel les au moins deux récipients sont reliés par une fermeture intermédiaire (5) située entre eux et par des fermetures (3, 4) appartenant aux récipients et se faisant face, les récipients (1, 2) reliés étant ouverts par un mouvement relatif de manière qu'au moins deux substances puissent être réunies ensemble,
caractérisé en ce que
les deux récipients (1, 2) peuvent être fermés et ouverts par des liaisons à vis tournant en sens contraires, portées par les fermetures (3, 4).
